# EUROPÄISCHE PATENTSCHRIFT

(11) **EP 0 889 138 B1**
(45) Veröffentlichungstag und Bekanntmachung des Hinweises auf die Patenterteilung: **26.03.2003**
(21) Anmeldenummer: 98111571.0
(22) Anmeldetag: 24.06.1998
(51) Int. Cl.: C21C 5/52, C21C 5/00, C21C 7/068

(54) **Verfahren und Vorrichtung zur Erzeugung von hochchromhaltigen Stählen und/oder Ferrolegierungen in einem Elektro-Lichtbogen-Konverter**
Process and installation for production of high-chromium containing steels and/ or alloys in an electric-arc-converter
Procédé et installation pour la fabrication d'aciers de haute teneur en chrome et/ou de ferro-alliages dans un convertisseur à arcs électriques

(30) Priorität: 02.07.1997 DE 19728102
(43) Veröffentlichungstag der Anmeldung: 07.01.1999
(73) Patentinhaber: SMS Demag AG, 40237 Düsseldorf (DE)
(72) Erfinder: Wu, Wei-Ping, Dr., 40699 Erkrath (DE); Deppner, Karl-Heinz, 46562 Voerde (DE); Schneider, Karl-Josef, 46514 Schermbeck (DE)
(74) Vertreter: Valentin, Ekkehard, Dipl.-Ing.

(56) Entgegenhaltungen:
- EP-A- 0 630 977
- DE-U- 9 304 662
- US-A- 3 850 617
- US-A- 5 112 387
- PATENT ABSTRACTS OF JAPAN vol. 010, no. 161 (C-352), 10. Juni 1986 & JP 61 015912 A (SANYOU TOKUSHIYU SEIKOU KK), 24. Januar 1986

## Beschreibung

Die Erfindung betrifft ein Verfahren und Vorrichtung zur Herstellung von Stählen mit überwiegend hohem Cr-Gehalt und/oder Ferrolegierungen, wobei der metallische Einsatz in einem Schmelzgefäß geschmolzen, legiert, gefrischt und reduziert wird, und wobei gleichzeitig durch Bodendüsen Prozeßgase zugeführt werden.

Zur Herstellung von rost-, säure- und hitzebeständigen Edelstählen mit hohem Reinheitsgrad und geringen Gasgehalten sind bereits verschiedene Verfahren bekannt.

Am bekanntesten ist dabei das Erschmelzen im Lichtbogenofen oder das Erschmelzen im Lichtbogenofen mit nachgeschaltetem Frischen in einem Konverter unter Verwendung von Mischgasen oder unter Vakuum.

Die Herstellung dieser RSH-Stähle nur im Lichtbogenofen ist energietechnisch sehr aufwendig und hinsichtlich des einzustellenden Reinheitsgrades problematisch.

Die Herstellung der angeführten Stähle im Lichtbogenofen mit nachgeschaltetem Frischen in bisher bekannten Konvertern unter Verwendung von Mischgasen hat den Nachteil, daß diese Konverter ursprünglich ausgelegt wurden für die alleinige Herstellung von Chromstählen, die einen kleineren spezifischen Reaktionsraum haben, als er für die Herstellung von Edelstahlqualitäten mit einem breitgefächerten Legierungsanteil erforderlich ist. Voraussetzung für eine notwendige hohe Frischund Aufheizgeschwindigkeit ist ein großes spezifisches Sauerstoffangebot. Außerdem ist während der Desoxydationsphase eine Reoxydation der Schmelze durch in den Reaktionsraum eintretende Luft nicht zu vermeiden.

Ferner findet eine intensive Luftsauerstoffberührung während des Abstichs des reduzierten Stahls statt, was als Folge störende oxydische Verunreinigungen ergibt und damit im Produkt zu Ausschuß führt.

Für die hier beschriebene Erzeugung von hochlegierten Edelstählen, vorzugsweise mit hohen Cr- und Ni-Gehalten, haben sich von der Anlagenkonzeption her das sogenannte "Duplexverfahren" - Verwendung eines Elektro-Lichtbogenofens mit nachgeschaltetem Konverter - sowie das sogenannte "Triplexverfahren" - Verwendung eines Lichtbogenofens mit nachgeschaltetem Konverter und nachgeschalteter Vakuumanlage - durchgesetzt.

Bei beiden Anlagenkonzeptionen dient der Lichtbogenofen jeweils als Vorschmelzaggregat. Der eigentliche Feinungsprozeß zur Herstellung der gewünschten Stahlqualität mit hohen Legierungsanteilen und niedrigen Kohlenstoffgehalten erfolgt in einem Konverter mit seitlichen Unterbaddüsen, in einem Konverter mit Bodendüsen oder in einem Konverter mit beiden Düsenanordnungen, - seitlich und im Boden -.

Bekannt sind das AOD- (Argon, Oxygen, Decarburization) bzw. das verbesserte AOD- (L) Verfahren (Argon, Oxygen, Decarburization) (Lance) mit einem Konverter mit einem spezifischen Volumen von 0,45 - 0,60 m³/t Stahl.

Das ursprüngliche Verfahren arbeitet nur mit einer oder mehreren Bodendüsen, während das verbesserte Verfahren über eine Lanze durch die Gefäßöffnung zusätzlich von oben Sauerstoff einbläst. Bekannt ist ferner das CLU-(L) (Creusot Loire Uddeholm) Verfahren, bei dem ein Teil des Inertgases zur Reduzierung des CO-Partialdruckes durch überhitzten Dampf ersetzt wird.

Beim K-OBM-S/K-BOP (K = Kombiniert = combined, Oxygen, Bottom, Maxhütte, Stainless or Kombiniert, Basic, Oxygen Process) -Verfahren werden sowohl Boden- oder Seitendüsen verwendet, wobei als Kühlgas zum Schutz der Düsen zusätzlich Kohlenwasserstoffe oder Inertgase oder eine Mischung von beiden Gasen verwendet werden.

Bei diesem Verfahren werden statt einem LBO und einem Konverter zwei Konverter verwendet, wobei in dem sogenannten Vorschmelzkonverter entphosphertes Roheisen zu einer Vorschmelze verblasen wird, das danach in eine Vorschmelzpfanne gefüllt und in den sogenannten Feinungskonverter gefüllt wird, wo mit einem Gemisch von O₂ + N₂ + (Ar) und einem kohlenwasserstoffhaltigen Schutzgas unter Zugabe von Schrott, Legierungsmitteln und Zuschlagstoffen der Feinungsprozeß durchgeführt wird. Bei beiden Gefäßen wird zusätzlich Sauerstoff über eine Toplanze in den Konverter geblasen.

Schließlich sei noch das KMS-S- (Kombiniert = combined, Maxhütte, Stainless-Steelmaking) Verfahren erwähnt, bei dem zusätzlich zu den o. g. Prozeßgasen Koks- oder Kohle-Zusätze in pulverisierter oder feinstückiger Form zur Nachverbrennung, bei gleichzeitiger Erhöhung des Anteiles an festen, metallischen Einsatzstoffen und zur Verbesserung der metallurgischen Prozeßführung, in das Konvertergefäß hinzugegeben werden.

Zum Einsatz kommen also bei beiden Anlagekonzeptionen jeweils ein Vorschmelzgefäß in Form eines Elektro-Lichtbogenofens und ein Frischgefäß in Form eines Konverters, wobei bei jedem Wechsel des Behandiungsaggregates mit einem Umfüllen der Vorschmelze Temperatur- bzw. Energieverluste sowie Ausbringens- bzw. Metallverluste in Kauf genommen werden müssen.

Um insbesondere die Chromverluste zu verringern, muß die Vorschmelze vor jedem Gefäßwechsel mit Fesi/Al reduziert werden. Es sind jedoch hier rechnerisch überschüssige Reduktionsmittel erforderlich, um eine möglichst vollständige Reduktion zu erreichen. Der so eingebrachte Überschuß muß im nachgeschalteten Aggregat, einem Konverter, nach dem Umfüllen wieder mit Sauerstoff behandelt werden, bevor die Entkohlung ohne wesentliche Chromverschlackung und weitere Behandlungsschritte durchgeführt werden.

Aus der DE 33 47 718 ist ein Verfahren zur Herstellung von Edelstählen, insbesondere von hochchromhaltigen Stählen bekannt, das den Weg über das vorher erwähnte "Duplex-Verfahren" wählt. Bei diesem Verfahren wird zur Herstellung von Stählen mit hohem Reinheitsgrad und geringen Gasgehalten in Stahlwerken und Stahlgießereien der Stahl nach dem Einschmelzen in einem Lichtbogenofen oder ähnlichem Schmelzaggregat mit den gewünschten Legierungsbestandteilen in einem Konverter umgefüllt, gefrischt und desoxydiert, wobei gleichzeitig eine Spülung mit Inertgas erfolgt und die Schmelze nach dem Abstich aus dem Konverter in der Pfanne durch Spülung mit Inertgas gefeint wird.

Es wird ein Konverter mit einem spezifischen Reaktionsraum zwischen 0,45 und 0,8 Nm³/t Stahl benutzt und die Prozeßgaszufuhr während der Konverterbehandlung im Bereich von 0,5 bis 2,0 Nm³/t ^{·} min geregelt.

Die Prozeßgaszufuhr erfolgt im Konverter durch Einblasöffnungen im Boden oder nahe dem Boden, wobei während der Desoxydationsphase die Konvertermündung zeitweise verkleinert wird und während des Abstichs auf den Stahl eine desoxydierende Substanz enthaltende Auffangschlacke aufgegeben wird.

Aus der DE 195 09 285 C1 ist eine Schmelzgefäßanlage mit einem oder auch zwei nebeneinander angeordneten Konvertergefäßen bekannt, wobei das Schmelzgefäß mit durch am Umfang angeordneten Tragelementen an inneren Laufringen lösbar befestigt ist und wo jeder der inneren Laufringe mittels Rollensegmenten in einem äußeren Laufring, der in einer Spurrille auf Fahrschienen abrollt, gelagert ist.

In das Konvertergefäß werden während der Stahlherstellung entweder eine an einer Hub- und Schwenkvorrichtung befestigte Blaslanze oder die an einer schwenkbaren Elektrodenhalterung befestigten Elektroden abgesenkt, um flüssiges, metallisches Einsatzmaterial zu frischen bzw. festes, metallisches Einsatzmaterial zu schmelzen.

Aus der EP 0 630 977 A1 ist ein Konverter zur Herstellung von Stahl aus festen und/oder flüssigen Einsatzstoffen, wie Roheisen und/oder Schrott und/oder Eisenschwamm bekannt, der ein feuerfest ausgekleidetes Frischgefäß, eine Sauerstoff oder ein sauerstoffhaltiges Gas zuführende Frischeinrichtung und eine Heizeinrichtung aufweist.

Zur Erzeugung des Stahles weist die Heizeinrichtung mindestens eine selbstverzehrende Graphit-Elektrode auf und die Frischeinrichtung ist unabhängig von der Heizeinrichtung entweder von einer Sauerstoffblaslanze gebildet oder weist unterhalb des Schmelzenbadspiegels liegende sauerstoffblasende Boden- und/oder Seitendüsen auf.

Das Verfahren ist dadurch gekennzeichnet, daß in einem ersten Verfahrensschritt ein Hauptfrischen von Roheisen und gegebenenfalls einer Teilmenge von Schrott und/oder Eisenschwamm durchgeführt wird und anschließend in einem zweiten Verfahrensschritt zusätzlich eingebrachter Schrott und/oder Eisenschwamm geschmolzen und gegebenenfalls gleichzeitig oder in einem dritten Verfahrensschritt gefrischt wird, wobei beim ersten Verfahrensschritt lediglich die Frischeinrichtung aktiv ist und in weiteren Verfahrensschritten sowohl die Frischeinrichtung als auch mindestens eine Graphit-Elektrode aktiviert sind, und zwar im Falle des Aufblasens von Sauerstoff alternierend und im Falle des Einblasens von Sauerstoff von unterhalb des Schmelzenbadspiegels alternierend oder gleichzeitig.

Weder der Konverter noch das Verfahren ist zur Erzeugung von RSH-Qualitäten geeignet, da einmal die geeigneten Vorrichtungen zum Einblasen von Inertgasen (Ar) mit kohlenwasserstoffhaltigen Kühlgasen sowie eine geeignete Gefäßkonzeption, zum anderen spezielle Verfahrensschritte fehlen, um zur Lösung der gestellten Aufgabe zu gelangen.

Die Aufgabe der Erfindung besteht darin, ein Stahlerzeugungs-Verfahren und eine entsprechende Vorrichtung zu schaffen, die die Temperatur - bzw. Energie - sowie Ausbringens- bzw. Metallverluste, insbesondere die Chromverluste, bei der Herstellung von Edelstählen weiter reduziert, die Anlagen- und Betriebskosten senkt und die Wirtschaftlichkeit der Herstellung von hochund höchstlegierten Edelstählen, insbesondere von RHS-Qualitäten insgesamt verbessert.

Die Lösung der Aufgabe erfolgt in der Weise, wie es im Anspruch 1 und Anspruch 8 angegeben ist. Die Ansprüche 2 - 7 betreffen eine vorteilhafte Durchführung des Verfahrens, die Ansprüche 9 - 12 eine vorteilhafte Ausgestaltung der Vorrichtung.

Erfindungsgemäß wird ein Schmelzaggregat geschaffen, das die Eigenschaften eines Elektro-Lichtbogenofens und eines Konverters in sich vereinigt, wobei bei Verwendung von festen metallischen Einsatzstoffen in Form von handelsüblichem Edelstahlschrott und Legierungsmitteln die Energie zum Einschmelzen und Herstellung einer Vorschmelze über die elektrische Energie des Lichtbogens erfolgt.

Für die weitere Behandlung der bereits vorlegierten Schmelze erfolgt eine Zuführung von Reaktions-, Kühlund Inertgasen über im Boden des Konverters oder seitlich über dem Boden angebrachte Düsen, wobei die spezifischen Einblasraten in einem Bereich von 0,1 bis 3,0 Nm³/t Stahl liegen.

Entsprechend dem Prozeßfortschritt werden als Prozeßgase O₂, CO₂, N₂, Ar, als Kühlgase CH₂, N₂, Ar, Luft eingesetzt.

Die Durchführung der Herstellung von hochchromhaltigen Stählen sowie von Ferrolegierungen in nur einem Schmelzgefäß mit einem Reaktionsvolumen von 0,4 m³/t - 1,5 m³/t, vorzugsweise von 0,45 m³/t - 0,75 m³/t Stahl, umfaßt nachfolgende Schritte:
a) Chargieren
   Schrott und Teile von Ferrolegierungen werden über Chargiermulden ins Schmelzgefäß chargiert, nachdem das Gefäß zur Chargierseite gedreht ist, wobei nach dem Wegschwenken der Haube eine schnelle Schrottchargierung gewährleistet ist.
   Auch flüssige Metalle, sei es Roheisen oder flüssiges FeCr, können ohne Schwierigkeiten chargiert werden. Darüber hinaus werden stückige Ferrolegierungen/Zuschläge und DRI/HBI kontinuierlich während des Prozesses zugegeben werden.
b) Schmelzen
   Es wird zuerst mit einem kürzeren Lichtbogen geringer elektrischer Leistung gearbeitet, bis im festen metallischen Einsatzmaterial eine ausreichende Ausbuchtung vorhanden ist. Anschließend wird die Leistung bis auf die max. Schmelzleistung erhöht, bis der Schrott bzw. die Einsatzmaterialien eingeschmolzen sind.
   Vor dem Schmelzen, d. h. während des Chargierens, werden die Bodendüsen nur mit Luft gekühlt. Zum Schmelzbeginn wird auf Stickstoff umgeschaltet. Wenn das Luftversorgungsnetz einen entsprechenden Druck anbietet, kann auch mit Luft weiter gespült werden. Nach Bildung eines flüssigen Sumpfes wird zusätzlich mit einem Gasgemisch von Sauerstoff und Inertgas geblasen, wobei der Durchfluß mit dem fortgeschrittenen Schmelzvorgang erhöht wird. Die Düsen werden mit CH4 und Inertgas als Shraud-Gas gekühlt.
c) Legieren
   Gegen Ende des Schmelzens werden Schlackenbildender und Ferrolegierungen zugegeben. Wenn eine ausreichende elektrische Energiemenge eingebracht ist, wird der Sauerstoffdurchfluß durch die Bodendüsen auf max. Durchfluß erhöht, die Lichtbogenleistung wird dabei auf ein Minimum reduziert.
d) Frischen
   Das Verhältnis vom Sauerstoff zum Inertgas im Gasgemisch wird schrittweise reduziert, um eine Inertgasatmosphäre zu erzeugen. Dadurch wird der CO-Partialdruck im Gefäß abgesenkt und die Entkohlung verläuft ohne große Chromverschlackung. Dank der hohen Temperatur an der Badoberfläche durch den Einfluß des Elektrolichtbogen wird die Entkohlung mit möglichst geringer Chromverschlackung zusätzlich begünstigt.
   Da bei Chargieren vom "Charge Chrom" oder flüssigem FeCr mit einem hohen Si-Gehalt sehr viel SiO2 in die Schlacke überführt wird, muß zwischenabgeschlackt werden, bevor eine weitere Entkohlung erfolgen kann.
e) Probenahme
   Wenn die erforderliche Sauerstoffmenge für die Erreichung eines bestimmten Kohlenstoffgehaltes eingeblasen ist, werden die Elektroden hochgefahren und weggeschwenkt.
   Es werden eine Temperaturmessung durchgeführt und eine Schmelz- und Schlackenprobe genommen. Wenn eine weitere Behandlung in einer Vakuumanlage durchgeführt werden soll, wird beispielsweise eine Temperatur von ca. 1650 °C und ein Kohlenstoffgehalt von ca. 0,3 % °C angestrebt. Soll der Stahl im Schmelzgefäß jedoch fertig behandelt werden, dann sind der erforderliche Endkohlenstoffgehalt von ca. 0,02 - 0,05 % und die erforderliche Gießtemperatur von ca. 1670 °C anzustreben.
g) Nachheizen und -blasen
   Wenn eine Korrektur von Temperatur und Kohlenstoffgehalt erforderlich wird, werden die Elektroden wieder eingeschwenkt. Es wird elektrisch aufgeheizt und mit einem inertgasreichen Gasgemisch geblasen.
h) Reduktion
   Nach dem Erreichen der gewünschten Temperatur und des Kohlenstoffgehaltes sowie der Legierungsgehalte wird die Schmelze mit FeSi und/oder A1 reduziert.
   Dadurch werden Metalle, vor allem Chrom aus der Schlacke, reduziert, Kalk wird zugegeben, um SiO2 in der Schlacke abzubinden.
i) Abschlacken
   Zum Abschlacken wird das Schmelzgefäß zur Abstichseite oder zur anderen Seite als beim Chargieren gedreht. Falls ein Abstichloch vorhanden ist, kann über dieses schlackenfrei abgestochen werden.
j) Entschwefelung
   Wenn eine tiefe Entschwefelung erforderlich ist, können Kalk und andere Entschwefelungsmittel in das Schmelzgefäß zugegeben werden. Mit Hilfe des Elektrolichtbogens und eines starken Bodenspülens kann eine effektive Entschwefelung erzielt werden.
k) weitere Behandlung
   Die Schmelze kann, wie bereits erwähnt, weiter in einer Vakuumanlage behandelt werden, um den Ar-Verbrauch bei der Produktion von tiefentkohlten und entstickten Stahlqualitäten zu reduzieren.

Das Schmelzgefäß zur Durchführung des Verfahrens ist mit einem in einem Tragring drehbar gelagerten bauchigen Gefäßmittel- und -unterteil ausgerüstet und mit einem auswechselbaren Boden versehen, in den Bodendüsen angeordnet sind. Das Gefäß kann mit einem abschwenkbaren Oberteil bzw. Gefäßdeckel abgedeckt werden, wobei die Gefäßöffnung möglichst klein gehalten wird, um das Eindringen von Falschluft während des Prozesses ins Gefäß zu verhindern.

Der Tragring ist halbkreisförmig ausgeführt, und die dem Tragring gegenüberliegende Gefäßseite im oberen Teil ist als vertikale Gefäßwand ausgebildet.

Durch eine Öffnung des abschwenkbaren Oberteiles werden Elektroden in das Schmelzgefäß eingefahren. Die im Boden angeordneten Düsen sind in bekannter Weise als Ringspalt- oder Manteldüsen ausgebildet. Ferner kann im bauchigen Gefäßmittelteil ein Abstichstutzen angeordnet sein.

Bei Einsatz des erfindungsgemäßen Schmelzgefäßes ergeben sich bei der Anlagenkonzeption gegenüber dem Duplex-Verfahren eine Reihe von Einsparungen. So kann beispielsweise eine einschiffige Halle verwendet werden, ein Pfannentransportfahrzeug, das zwischen zwei Hallen verkehrt, kann entfallen, die erforderlichen Krananlagen, Bunkeranlagen mit Dosier- und Beschickungseinrichtungen für Legierungsmittel und Zuschlagstoffe, die Entstaubungsanlagen werden reduziert.

Auch der Bedarf an Betriebsmitteln wie Kühlwasser sowie von Medien für das Einblasen in den Konverter, insbesondere Sauerstoff, kann teilweise erheblich reduziert werden, der Schlackenanteil kann von ca. 180 kg/t auf 130 kg/t reduziert und damit der Verbrauch von Kalk und Reduktionsmitteln gesenkt werden. Ferner kann die elektrische Energie für das Einschmelzen bis zu 100 kW/t Stahl und der Elektrodenverbrauch bis zu 0,8 kg/t Stahl gesenkt werden.

Parallel mit der Senkung o. g. Verbrauchswerte kann die tap-to-tap-Zeit gegenüber dem Duplex-Verfahren gesenkt werden. Den bekannten tap-to-tap-Zeiten von 65 min für einen LBO und 45 min für einen AOD- oder ASM-Konverter, zusammen also 110 min, steht eine verminderte tap-to-tap-Zeit von ca. 72 min gegenüber. Auch der ff-Verbrauch kann bei der erfindungsgemäßen Anlage in entscheidendem Maße gesenkt werden.

Das Verfahren und die Vorrichtung zur Durchführung des Verfahrens werden anhand von schematischen Diagrammen und Zeichnungen näher erläutert.

Es zeigen:
- Fig. 1: Behandlungsverlauf einer 100-t-Schmelze bis zu einem Endkohlenstoffgehalt von 0,3 % mit anschließender Weiterbehandlung in einer Vakuumanlage,
- Fig. 2: Behandlungsverlauf einerk 100-t-Schmelze bis zu einem Endkohlenstoffgehalt von 0,02 - 0,05 % ohne Weiterbehandlung in einer Vakuumanlage,
- Fig. 3: eine Draufsicht auf das Schmelzgefäß,
- Fig. 4: eine Seitenansicht des Schmelzgefäßes in Chargier-Position,
- Fig. 5: eine Seitenansicht des Schmelzgefäßes in Einschmelz-Position,
- Fig. 6: eine Seitenansicht des Schmelzgefäßes in der Feinungsperiode.

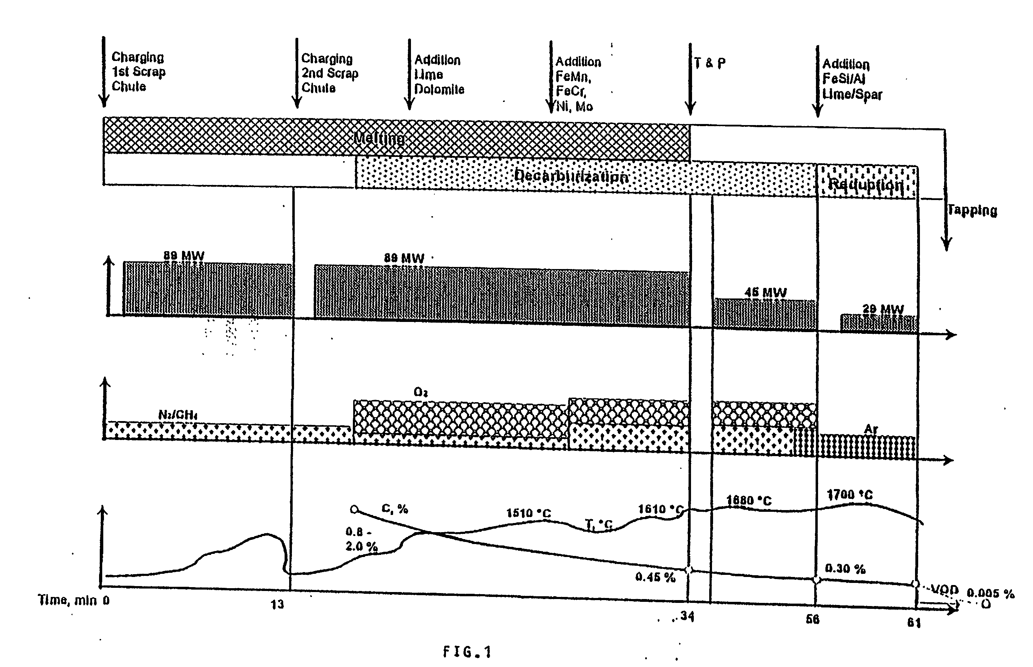

Fig. 1 zeigt den schematischen Behandlungsverlauf einer 100-t-Schmelze in dem erfindungsgemäßen Konvertergefäß, wobei die Einspeisung der elektrischen Energie von einem 95 MVA Transformator erfolgt.

In diesem Zeitwegdiagramm sind die einzelnen Verfahrensschritte zur Erzeugung eines RHS-Stahles in Abhängigkeit von der Zugabe von metallischen, festen Einsatzmaterialien, Zuschlägen, Legierungs- und Reduktionsmitteln wie folgt dargestellt:
- Schmelzen, Entkohlung und Reduktion von Chrom,
- Elektrischer Energieverbrauch durch die Elektroden in MW,
- Zugabe von Kühl- und Reaktionsgasen wie N₂/CH₄ sowie von O₂ und Ar,
- Temperaturverlauf der Schmelze mit Darstellung des Entkohlungsverlaufes.

Der Endkohlenstoffgehalt von 0,3 % wird rechnerisch nach 61,0 Minuten erreicht. Danach wird die Schmelze in eine Gießpfanne entleert und zu einer Weiterbehandlung in einer Vakuumanlage transportiert. In der Vakuumanlage wird u. a. ein Entkohlenstoffgehalt von 0,005 % erreicht.

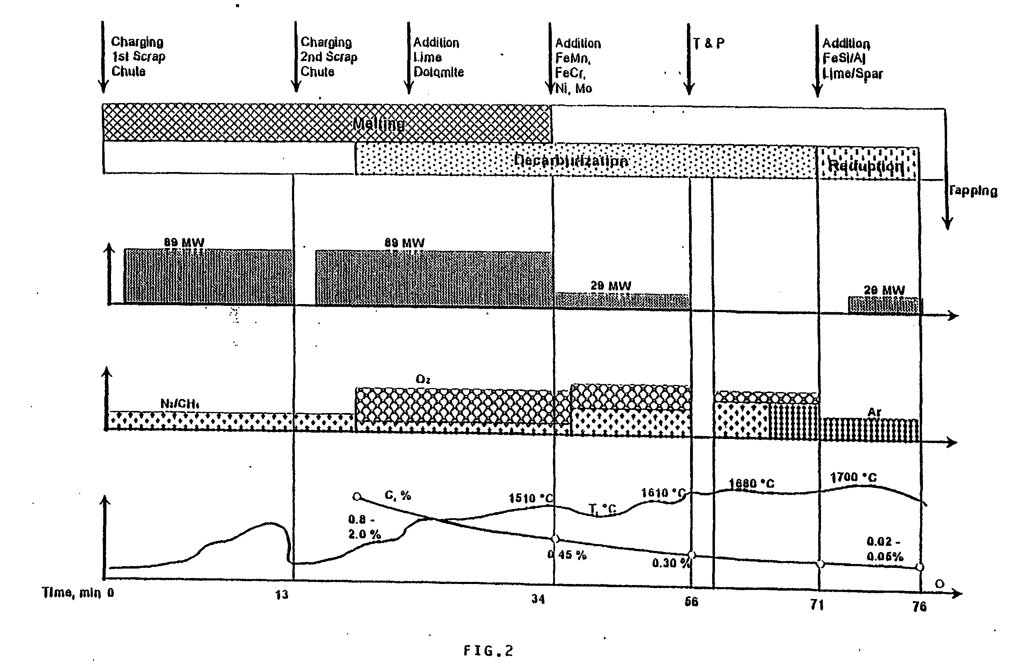

Fig. 2 zeigt den schematischen Behandlungsverlauf einer 100-t-Schmelze in dem erfindungsgemäßen Konvertergefäß, wobei die Einspeisung der elektrischen Energie von einem 95 MVA Transformator erfolgt.

Eine Vakuumbehandlung dieser Schmelze ist nicht vorgesehen, da für diese Qualität nur ein Kohlenstoffgehalt von 0,02 - 0,05 % anzustreben ist.
In diesem Zeitwegdiagramm sind Verfahrensschritte zur Erzeugung eines RHS-Stahles in Abhängigkeit von der Zugabe von metallischen, festen Einsatzmaterialien, Zuschlägen, Legierungs- und Reduktionsmitteln wie folgt dargestellt:
- Schmelzen, Entkohlung und Reduktion von Chrom,
- Elektrischer Energieverbrauch durch die Elektroden in MW,
- Zugabe von Kühl- und Reaktionsgasen wie N₂/CH₄ sowie von O₂ und Ar,
- Temperaturverlauf der Schmelze mit Darstellung des Entkohlungsverlaufes.

Ein Kohlenstoffgehalt von 0,3 % wird hier rechnerisch nach 56,0 Minuten erreicht. Durch eine weitere Behandlungszeit von rd. 20 Minuten wird der angestrebte C-Gehalt von 0,02 - 0,05 % erreicht.

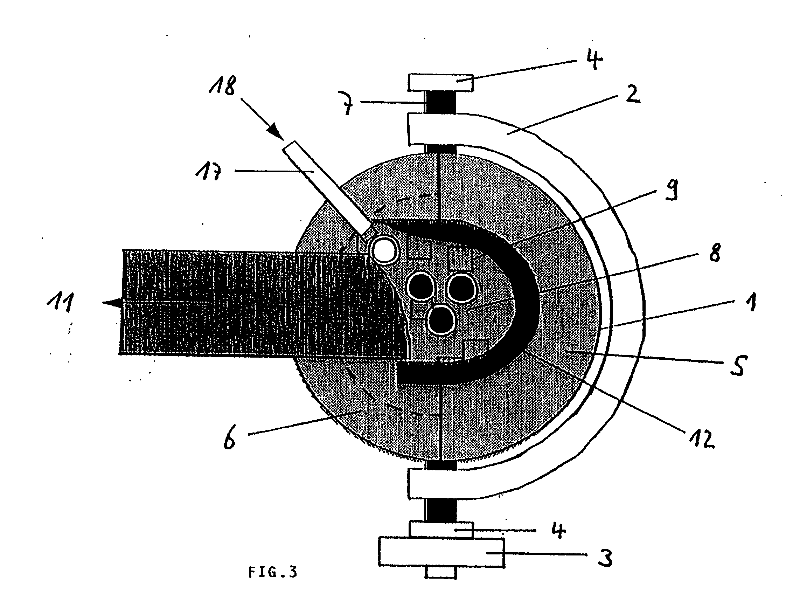

Fig. 3 zeigt eine Draufsicht auf das Schmelzgefäß (1), das in einem halbkreisförmigen Tragring (2) in Drehlagern (4) mit einseitigem Antrieb (3) verlagert ist.

Das Gefäß (1) ist in einem gewölbten Gefäßteil (5) und einem zylindrischen Gefäßteil (6) geteilt, wobei aus Konstruktions- und Symmetriegründen der Übergang im Bereich der Drehachse (7) angeordnet ist.

Im Boden (10) des Gefäßes (1) sind die Bodendüsen (9) angeordnet, die Elektroden (8) werden durch das Gefäßoberteil (12) in das Gefäß (1) abgesenkt, die Rauchgase werden über eine Absaughaube (11) abgesaugt und einer nicht dargestellten Entstaubungsanlage zugeführt.

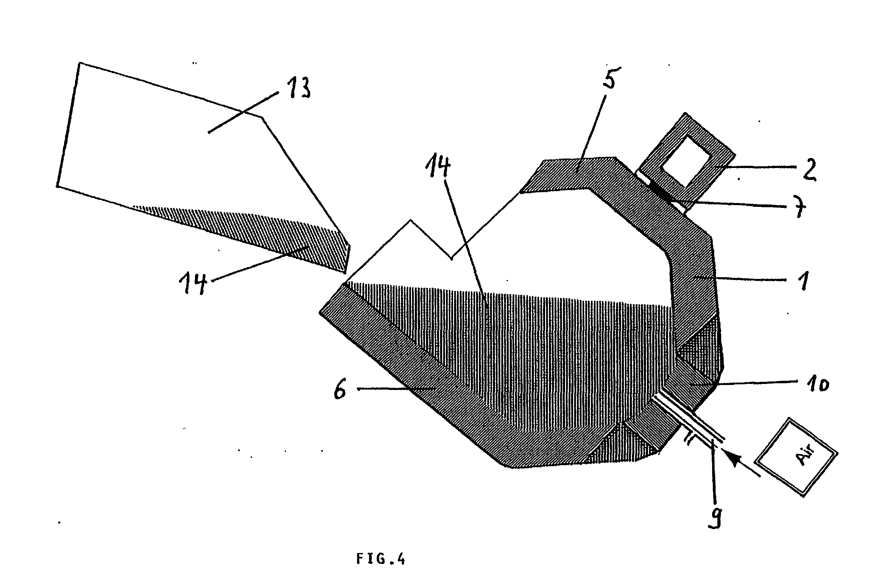

Fig. 4 zeigt eine Seitenansicht des in einem Tragring (2) gelagerten Konvertergefäßes (1) in Chargierposition, wobei feste, metallische Einsatzstoffe (14) mit einer Chargiermulde (13) am zylindrischen Gefäßteil (6) in das Konvertergefäß (1) chargiert werden. Während des Chargiervorganges wird Luft oder Stickstoff durch die im Boden (10) angeordneten Bodendüsen (9) geblasen.

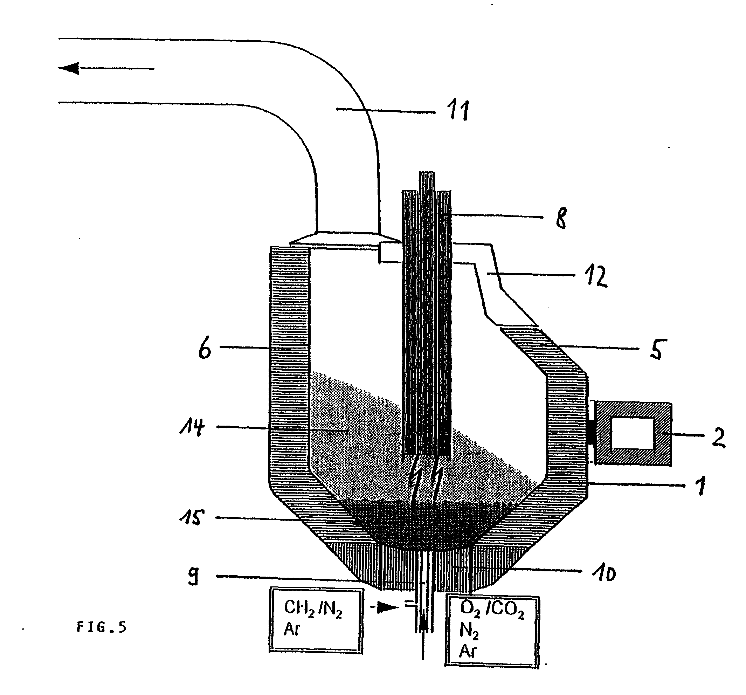

In Fig. 5 ist das in einem Tragring (2) befestigte Schmelzgefäß (1) mit gewölbtem Mittelteil (5) und zylindrischem Gefäßteil (6) in Einschmelzposition dargestellt, wobei die Elektroden (8) durch das Gefäßoberteil (12) in das Schmelzgefäß (1) bis an den festen Einsatz (14) abgesenkt werden. Oberhalb des Konverterbodens (10), in dem die Bodendüsen (9) angeordnet sind, hat sich bereits ein Teil von flüssigem Metall (Schmelze) (15) angesammelt.

Entsprechend dem in Fig. 1 bzw. 2 dargestellten Prozeßverlauf werden durch den äußeren Teil der Düsen (9) Kühlgase - CH₂/N₂ - und durch den inneren Teil der - Düsen (9) Prozeßgase - O₂/CO₂, N₂, Ar - zugeführt. Die Rauchgase werden durch eine Absaugehaube (11) abgesaugt.

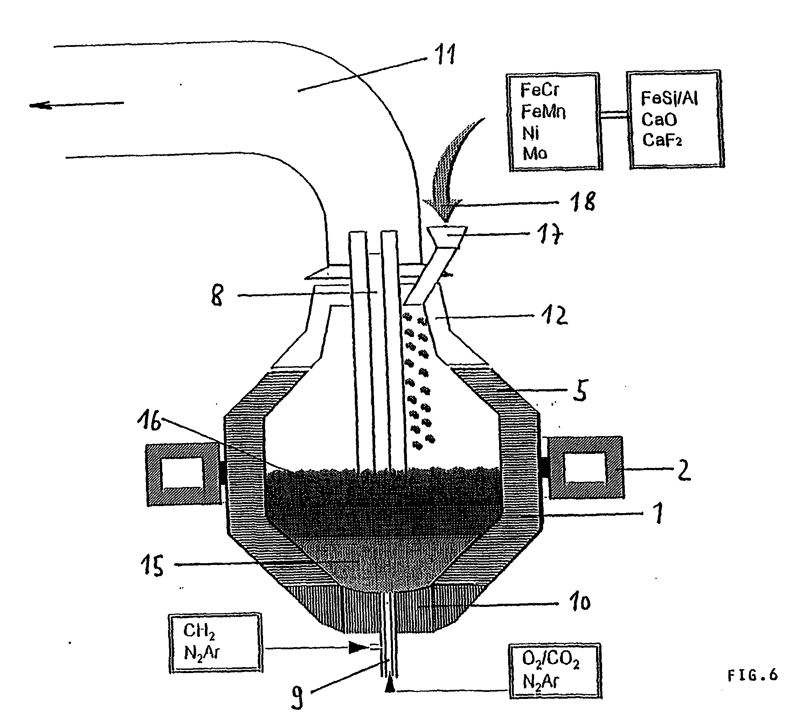

In Fig. 6 ist das in einem Tragring (2) gelagerte Schmelzgefäß (1) in der Feinungsphase gegen Ende des Prozeßverlaufes dargestellt. Die festen Einsatzstoffe sind aufgeschmolzen, es hat sich ein Gemisch aus Schlacke (16) und Schmelze (15) gebildet.

In dieser Phase werden Legierungs- bzw. Zuschlagstoffe (18) über eine Zuführung (17) zugegeben, die Behandlung der Schmelze erfolgt im verringerten Umfang durch elektrische Energie über die Elektroden (8) sowie durch die Reaktionsgase - O₂/CO₂, N₂, Ar - über die im Boden (10) angeordneten Bodendüsen (9).

### Bezugsziffernliste:

- 1: Konvertergefäß
- 2: Tragring
- 3: Antrieb
- 4: Lager
- 5: Gewölbter Gefäßteil
- 6: Zylindrischer Gefäßteil
- 7: Drehache
- 8: Elektroden
- 9: Bodendüsen
- 10: Konverterboden
- 11: Absaughaube für Rauchgase
- 12: Gefäßoberteil
- 13: Chargiermulde
- 14: Festes Einsatzmaterial
- 15: Schmelze
- 16: Schlacke
- 17: Zuführung Zuschlagstoffe
- 18: Legierungs- und Zuschlagstoffe

## Patentansprüche

1. Verfahren zur Herstellung von Stählen mit überwiegend hohem Cr-Gehalt, wobei der metallische Einsatz in einem Schmelzgefäß geschmolzen, legiert, gefrischt und reduziert wird, und wobei durch Bodendüsen Prozeßgase zugeführt werden,
**dadurch gekennzeichnet,**
**daß** ein Schmelzgefäß mit einem spezifischen Reaktionsvolumen von 0,4 bis 1,5 m³/t benutzt und die Einblasraten der Prozeßgase im Bereich von 0,1 bis 3,0 Nm³/t/min geregelt werden,
**daß** das feste Einsatzmaterial mittels Lichtbogen geschmolzen, wobei gleichzeitig mit Luft/Stickstoff geblasen und nach Bildung eines flüssigen Sumpfes mit einem Gasgemisch aus Sauerstoff und Inertgas geblasen wird,
**daß** nach Zugabe von Schlackenbildnern und
Legierungsmitteln der Sauerstoffdurchfluß erhöht und die Lichtbogenleistung entsprechend reduziert wird,
**daß** während des Frischens der Sauerstoffdurchfluß im Verhältnis zum Inertgas reduziert wird und die Entkohlung durch Verstärkung des Elektrolichtbogens mit geringer Chromverschlackung erfolgt,
**daß** während der Reduktion der Schmelze mit geeigneten Reduktionsmitteln vor allem Chrom aus der Schlacke reduziert und Silizium durch Schlackenbildner abgebunden wird.

2. Verfahren nach Anspruch 1,
**dadurch gekennzeichnet,**
**daß** ein Schmelzgefäß mit einem spezifischen Reaktionsvolumen von 0,45 - 0,75 m³/t Stahl benutzt wird.

3. Verfahren nach Anspruch 1 und 2,
**dadurch gekennzeichnet,**
**daß** flüssige Metalle, Roheisen oder FeCr, dem Schmelzgefäß zugegeben werden.

4. Verfahren nach Anspruch 1 - 3,
**dadurch gekennzeichnet,**
**daß** Legierungsmittel, Schlackenbildner, Eisenschwamm u. a. Stoffe kontinuierlich dem Schmelzgefäß zugegeben werden.

5. Verfahren nach Anspruch 1 - 4,
**dadurch gekennzeichnet,**
**daß** für eine Tiefentschwefelung Schlackenbildner und spezielle Entschwefelungsmittel bei eingeschaltetem Elektrolichtbogen und Einleiten eines Gasgemisches zugegeben werden.

6. Verfahren nach Anspruch 1 - 5,
**dadurch gekennzeichnet,**
**daß** die Schmelze aus dem Schmelzgefäß in ein Vakuumgefäß überführt und einer sekundärmetallurgischen Nachbehandlung unterzogen wird.

7. Verfahren nach Anspruch 1 - 4,
**dadurch gekennzeichnet,**
**daß** der Anteil des festen Einsatzmaterials bzw. der Anteil der flüssigen Metalle unter den Anteil der Ferrolegierungen reduziert wird.

8. Schmelzgefäß zur Durchführung des Verfahrens nach den Ansprüchen 1 - 7, mit einem in einem Tragring drehbar gelagerten Gefäß, mit in einem auswechselbaren Boden angeordneten Düsen und mit einem abschwenkbaren Gefäßoberteil,
**dadurch gekennzeichnet,**
**daß** der Tragring (2) halbkreisförmig ausgeführt ist,
**daß** der dem Tragring (2) gegenüberliegende zylindrische Gefäßteil (6) im oberen und mittleren Teil des Konvertergefäßes (1) als vertikale, gebogte Gefäßwand ausgebildet ist,
und **daß** der Übergang vom gewölbten Gefäßteil (5) in den zylindrischen Gefäßteil (6) im Bereich der Drehachse (7) angeordnet ist.

9. Schmelzgefäß nach Anspruch 8,
**dadurch gekennzeichnet,**
**daß** durch Öffnungen des abschwenkbaren Gefäßoberteiles (12) Elektroden (8) in das Schmelzgefäß (1) eingefahren werden.

10. Schmelzgefäß nach Anspruch 8,
**dadurch gekennzeichnet,**
**daß** an einer weiteren Öffnung des abschwenkbaren Gefäßoberteiles (12) eine Absaughaube (11) für Rauchgase angeordnet ist.

11. Schmelzgefäß nach den Ansprüchen 8 - 10,
**dadurch gekennzeichnet,**
**daß** die im Konverterboden (10) angeordneten Bodendüsen (9) in bekannter Weise als Ringspaltoder Manteldüsen ausgebildet sind.

12. Schmelzgefäß nach den Ansprüchen 8 - 11,
**dadurch gekennzeichnet,**
**daß** im oberen Bereich des gewölbten Gefäßteiles (5) ein Abstichstutzen angeordnet ist.

## Claims

1. Method of producing steels with predominantly high Cr content, wherein the metallic charge is melted in a melt vessel, alloyed, refined and reduced, and wherein process gases are fed through base nozzles, **characterised in that** a melt vessel with a specific reaction volume of 0.4 to 1.5 m³/t is used and the injection rates of the process gases are regulated in the range of 0.1 to 3.0 Nm³/t, that the solid charge material is melted by means of arcs, wherein at the same time there is blowing with air/nitrogen and after formation of a liquid pool there is blowing with a gas mixture of oxygen and inert gas, that after addition of slag formers and alloying media the oxygen throughflow is increased and the arc power correspondingly reduced, that during the refining the oxygen throughflow is reduced by comparison with the inert gas and the decarburisation is carried out by strengthening the electric arc with low slagging of chrome, and that during the reduction of the melt by suitable reduction media primarily chromium is reduced from the slag and silicon is bound by slag former.

2. Method according to claim 1, **characterised in that** a melt vessel with a specific reaction volume of 0.45 to 0.75 m³/t steel is used.

3. Method according to claim 1 or 2, **characterised in that** liquid metals, pig iron or FeCr is or are added to the melt vessel.

4. Method according to any one of claims 1 to 3, **characterised in that** alloying medium, slag former, metallised iron ore and similar substances are added continuously to the melt vessel.

5. Method according to any one of claims 1 to 4, **characterised in that**, for a total desulfurisation, slag former and special desulfurisation medium are added with switched-on electric arc and introduction of a gas mixture.

6. Method according to any one of claims 1 to 5, **characterised in that** the melt is transferred from the melt vessel to a vacuum vessel and is subjected to a secondary metallurgical post-treatment.

7. Method according to any one of claims 1 to 4, **characterised in that** the proportion of solid charge material or the proportion of liquid metals is reduced below the proportion of ferro-alloys.

8. Melt vessel for carrying out the method according to claims 1 to 7, with a vessel rotatably mounted in a support ring, with nozzles arranged in an exchangeable base and with a vessel upper part which can be pivoted away, **characterised in that** the support ring (2) is constructed to be semicircular, that the cylindrical vessel part (6) opposite the support ring (2) is constructed in the upper and middle part of the converter vessel (1) as a vertical, curved vessel wall and that the transition from curved vessel part (5) to the cylindrical vessel part (6) is arranged in the region of the axis (7) of rotation.

9. Melt vessel according to claim 8, **characterised in that** electrodes (8) are driven into the melt vessel (1) through openings in the vessel upper part (12) which can be pivoted away.

10. Melt vessel according to claim 8, **characterised in that** an extractor hood (11) for flue gases is arranged at a further opening in the vessel upper part (12) which can be pivoted away.

11. Melt vessel according to claims 8 to 10, **characterised in that** the base nozzles (9) arranged in the converter base (10) are constructed in known manner as annular gap nozzles or jacket nozzles.

12. Melt vessel according to claims 8 to 11, **characterised in that** a tap connection is arranged in the upper region of the curved vessel part (5).

## Revendications

1. Procédé pour la production d'aciers présentant en majeure partie une haute teneur en Cr, la charge métallique étant mise en fusion dans un récipient de fusion, alliée, affinée et réduite, des gaz de réaction étant amenés à travers des buses de fond,
**caractérisé en ce que**
l'on utilise un récipient de fusion d'un volume de réaction spécifique de 0,4 à 1,5 m³/t et on établit les débits de soufflage des gaz de réaction dans la plage de 0,1 à 3,0 Nm³/t/min,
on fait fondre la matière de charge solide à l'aide d'un arc électrique, et on souffle simultanément un mélange air/azote, et après formation d'un bain liquide on souffle un mélange gazeux d'oxygène et de gaz inerte,
après addition de fondants de scorification et d'agents d'alliage, on augmente le débit d'oxygène et on réduit en correspondance la puissance de l'arc électrique,
pendant l'affinage on réduit le débit d'oxygène par rapport au gaz inerte, et la décarburation s'effectue par intensification de l'arc électrique avec faible scorification de chrome,
pendant la réduction de la matière en fusion avec des agents de réduction appropriés, on réduit surtout du chrome à partir des scories et on fait durcir du silicium par les fondants de scorification.

2. Procédé selon la revendication 1, **caractérisé en ce que** l'on utilise un récipient de fusion d'un volume de réaction spécifique de 0,45 - 0,75 m³/t d'acier.

3. Procédé selon les revendications 1 et 2, **caractérisé en ce que** l'on ajoute dans le récipient de fusion des métaux liquides, du fer brut ou du FeCr.

4. Procédé selon l'une des revendications 1 à 3, **caractérisé en ce que** l'on ajoute en continu dans le récipient de fusion des agents d'alliage, des fondants de scorification, de la mousse de fer et d'autres substances.

5. Procédé selon l'une des revendications 1 à 4, **caractérisé en ce que** pour une désulfuration en profondeur, on ajoute des fondants de scorification et des agents de désulfuration spéciaux lorsque l'arc électrique est en marche et que l'on introduit un mélange gazeux.

6. Procédé selon l'une des revendications 1 à 5, **caractérisé en ce que** l'on transfère la matière en fusion hors du récipient de fusion dans un récipient à vide et on la soumet à un retraitement métallurgique secondaire.

7. Procédé selon les revendications 1 à 4, **caractérisé en ce que** l'on réduit la part de matière solide ou la part des métaux liquides pour la faire passer au-dessous de la part des ferro-alliages.

8. Récipient de fusion pour mettre en oeuvre le procédé selon l'une des revendications 1 à 7, comportant un récipient monté mobile en rotation dans un anneau porteur, des buses agencées dans un fond interchangeable, et une partie supérieure de récipient mobile en basculement vers le bas,
**caractérisé en ce que**
l'anneau porteur (2) est réalisé en forme de demi-cercle,
la partie de récipient cylindrique (6) opposée à l'anneau porteur (2) dans la partie supérieure et médiane du récipient de convertisseur (1) est réalisée sous forme de paroi de récipient verticale incurvée,
et la transition de la partie de récipient bombée (5) vers la partie de récipient cylindrique (6) est agencée dans la zone de l'axe de rotation (7).

9. Récipient de fusion selon la revendication 8, **caractérisé en ce que** des électrodes (8) sont rétractées dans le récipient de fusion (1) à travers des ouvertures de la partie de récipient supérieure mobile en basculement (12).

10. Récipient de fusion selon la revendication 8, **caractérisé en ce qu'**au niveau d'une autre ouverture de la partie de récipient supérieure (12) mobile en basculement est agencée une coiffe d'aspiration (11) pour des filmées.

11. Récipient de fusion selon l'une des revendications 8 à 10, **caractérisé en ce que** les buses (9) agencées dans le fond du convertisseur (10) sont réalisées de manière connue sous forme de buses à fente annulaire ou de buses enveloppes.

12. Récipient de fusion selon l'une des revendications 8 à 11, **caractérisé en ce qu'**un manchon de coulée est agencé dans la zone supérieure de la partie de récipient bombée (5).
